# DEMANDE DE BREVET EUROPEEN

(11) **EP 1 131 990 A1**
(43) Date de publication de la demande: **12.09.2001**
(21) Numéro de dépôt: 01400571.4
(22) Date de dépôt: 05.03.2001
(51) Int. Cl.: A01B 79/00, A01C 17/00, A01M 7/00

(54) **Véhicule d'épandage à épandage variable**

(30) Priorité: 06.03.2000 FR 0002866
(71) Demandeur: Draghi, Umberto, 1170 Bruxelles (BE)
(72) Inventeur: Draghi, Umberto, 1170 Bruxelles (BE)
(74) Mandataire: Michelet, Alain

(57) **Abrégé**

L'invention a trait à un véhicule d'épandage à épandage variable permettant d'épandre au moins un matériau, et des moyens de commande permettant de varier la quantité du (ou des) matériau(x) épandu(s). Ce véhicule comprend également des moyens de détection d'une position du véhicule par rapport à un répère extérieur.

## Description

L'invention concerne un véhicule d'épandage à épandage variable. Plus particulièrement, l'invention a trait à un véhicule permettant d'épandre un ou plusieurs matériaux et comprenant à cet effet des moyens de commande permettant de varier la quantité du (ou des) matériau(x) épandu(s).

A ce jour, l'épandage de matériaux pour des applications agricoles ou dans le cadre de travaux publics se contrôle uniquement par le poids des produits déposés, qu'ils soient épandus sous la forme d'une poudre ou d'un granulat, par arrosage ou par introduction directe dans le sol, en relation à la vitesse de translation du véhicule d'épandage. La vitesse de translation est habituellement contrôlée au moyen d'une sonde, d'un palpeur ou de tout autre détecteur de rotation monté sur une des roues du véhicule, sur l'axe de cette roue ou sur une transmission reliée à l'axe de cette roue.

Une telle disposition fournit une information non signifiante lorsque le véhicule se trouve empêché d'avancer, alors que sa roue continue à tourner: le détecteur continue de signaler un déplacement du véhicule et l'épandage des matériaux continue, bien que le véhicule n'avance pas.

Une situation différente, mais tout aussi inefficace peut se produire, lorsque le véhicule d'épandage n'est pas un véhicule auto-moteur, et notamment lorsque le détecteur n'est pas relié à une roue de traction, mais à une roue mue par le sol sur lequel le véhicule se déplace. Il peut alors se produire que la roue à laquelle le détecteur est relié glisse et n'est donc pas entraînée. Dans ce cas, le détecteur ne signale pas de déplacement alors que, en réalité, il y a bien un déplacement du véhicule.

Par ailleurs, dans chacune des deux conceptions évoquées ci-avant l'épandage des matériaux est lié, à la fois strictement et uniquement, à la vitesse de déplacement signalée par le détecteur. Aucune variation indépendante de la vitesse indiquée n'est possible.

Le but de l'invention est de proposer des moyens qui permettent de varier la quantité de matériau épandu indépendamment de la vitesse, réelle ou indiquée, avec laquelle le véhicule d'épandage se déplace sur un terrain donné.

Le but de l'invention est atteint avec un véhicule d'épandage à épandage variable permettant d'épandre un ou plusieurs matériaux et comprenant à cet effet des moyens de commande permettant de varier la quantité du (ou des) matériau(x) épandu(s).

Conformément à l'invention, le véhicule d'épandage comprend également des moyens de détection d'une position du véhicule par rapport à un repère extérieur.

Ces moyens de détection d'une position du véhicule sont avantageusement constitués par des moyens électroniques permettant de déterminer la position du véhicule par rapport à au moins un point fixe.

L'invention est décrite ci-après en faisant indifféremment référence à l'épandage d'un matériau unique ou de plusieurs matériaux, la différence qui en découle (par exemple le nombre de moyens d'épandage et le nombre de moyens de commande pour ces moyens d'épandage) ne changeant pas le principe de l'invention qui est celui d'une variation de la quantité de matériau(x) épandu(s) en fonction d'un changement de position du véhicule d'épandage par rapport à un répère extérieur.

L'invention concerne également les caractéristiques ci-après considérées isolément ou selon toutes leurs combinaisons techniquement possibles:
- Les moyens de détection d'une position sont reliés à des moyens de commande d'épandage de façon qu'il y a épandage de matériau uniquement pendant un déplacement du véhicule.

Cette disposition évite qu'il y ait épandage de matériau lorsque le véhicule ne se déplace pas.

Dans le cadre de la présente invention, la notion de déplacement est essentiellement celle d'un changement de position. En conséquence, toute autorisation d'épandage - par un signal approprié envoyés aux moyens de commande de l'épandage - nécessite au préalable de constater que le véhicule a effectivement changé de position.

Cette disposition permet aussi de varier l'épandage lorsque le véhicule se déplace. La variation de l'épandage peut concerner aussi bien la quantité de matériau épandu que le type de matériau épandu, selon ce que le véhicule d'épandage comprend un ou plusieurs moyens d'épandage.
- Les moyens de détection d'une position sont reliés aux moyens de commande d'épandage de façon qu'il y a épandage de matériaux uniquement pendant un déplacement du véhicule dans une direction prédéfinie.

Cette disposition est particulièrement intéressante pour des véhicules équipés de moyens d'épandage à leurs deux extrémités. Selon la direction d'avancement du véhicule, les uns ou les autres des moyens d'épandage sont activés, ce qui permet un épandage en va-et-vient sans que le véhicule ne roule - dans une des deux directions du va-et-vient - sur le matériau fraîchement épandu.

De plus, la limitation de l'épandage à une ou deux directions de déplacement du véhicule d'épandage permet d'arrêter momentanément l'épandage, par exemple lorsque le véhicule contourne un obstacle et sort ainsi de son trajet prévu.
- Les moyens de détection d'une position sont reliés à des moyens de commande de déplacement du véhicule.

Cette disposition permet par exemple d'effectuer un déplacement automatisé du véhicule.

Selon une variante, cette disposition pourrait permettre aussi de faire varier la force de traction pour maintenir la vitesse de déplacement stable.
- Le véhicule comprend une mémoire destinée à stocker des informations sur la base desquelles les moyens de commande d'épandage changent la quantité et/ou le type de matériau épandu.

Cette disposition permet une automatisation de l'épandage de matériaux aussi bien en ce qui concerne la quantité de matériau épandu que le parcours d'épandage et permet, par exemple, d'éviter un épandage répété à un endroit sur lequel le véhicule passe à plusieurs reprises au cours d'un trajet non rectiligne.
- Les moyens de détection d'une position comprennent un module GPS (Globe Positioning System).

Le module GPS, ou un dispositif comprenant un module GPS, permet de déterminer à chaque instant la position du véhicule par rapport à un répère extérieur constitué par les moyens du GPS, représentés dans le présent texte et les dessins par un satellite. En utilisant un tel détecteur de position, on donne d'abord la possibilité d'effectuer l'épandage avec une grande précision, aussi bien en ce qui concerne le trajet du véhicule que la prise en compte de déviations imprévues du trajet prévu. Puis, cette disposition ouvre la possibilité de varier, automatiquement ou sémi-automatiquement, l'épandage de matériaux selon différents critères de variation.

L'invention est applicable aussi bien à des véhicules destinés à épandre des matières liquides, pulvérulentes ou solides qu'à des machines telles qu'une stabilisatrice de sol ou une recycleuse de sol, c'est-à-dire à des machines redéposant un matériau préalablement prélevé au sol.

D'autres caractéristiques et avantages de l'invention ressortiront à la lecture de la description des deux exemples de réalisation d'un véhicule selon l'invention, faite en référence aux dessins. Dans ces dessins:
la Figure 1 représente schématiquement le véhicule d'épandage de l'invention sous la forme d'un véhicule automoteur, et
la Figure 2 représente un véhicule d'épandage de l'invention sous la forme d'un véhicule tracté par un véhicule automoteur.

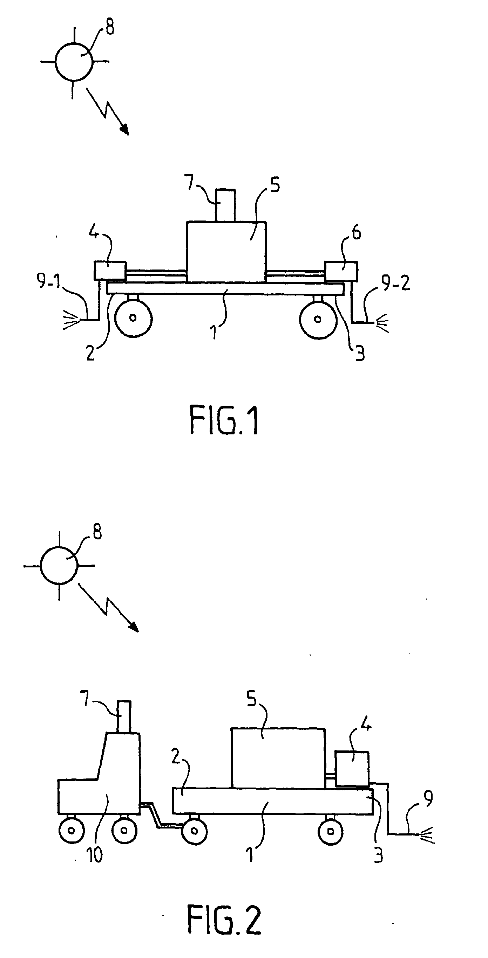

Le véhicule d'épandage de l'invention, qu'il soit automoteur ou tracté, comprend un châssis 1 avec un axe médian constituant un axe longitudinal du véhicule, et des extrémités 2 et 3 qui forment respectivement une partie avant et une partie arrière du véhicule, vu dans le sens longitudinal de celui-ci. Sur ce châssis 1 est monté un dispositif d'épandage 4 relié à un réservoir 5 contenant le matériau à épandre. Dans la disposition représentée sur la Figure 1, le véhicule est équipé d'un second dispositif d'épandage 6 également relié au réservoir 5. Chacun des dispositifs d'épandage 4, 6 est équipé d'une buse référencée respectivement 9 (Fig. 2), 9-1 ou 9-2 (Fig. 1). Chacune de ces buses peut être une buse unique ou un ensemble de deux ou davantage de buses, selon le mode de réalisation du véhicule d'épandage choisi ou selon une variante de celui-ci.

Dans la configuration représentée dans la Figure 2, le véhicule d'épandage de l'invention comprend des éléments et dispositifs, connus en eux-mêmes, permettant son attelage à un véhicule tracteur 10. Ces moyens ne sont pas représentés en détail.

Selon différentes variantes du véhicule de l'invention, et notamment selon la nature du travail à effectuer, le véhicule peut être équipé de deux ou de plusieurs réservoirs, par exemple pour pouvoir épandre différents matériaux pendant un même passage du véhicule, simultanément ou selon une sélection préalablement définie en fonction de différentes sections du trajet.

Afin de déterminer constamment la position du véhicule d'épandage pendant son utilisation, le véhicule est pourvu d'un dispositif de détection d'une position 7 sous la forme d'un module GPS. Ce module de détection 7 reçoit constamment des signaux émis par un satellite 8 représentatif des équipements formant le système GPS. Ces signaux sont acheminés vers un dispositif d'exploitation qui a essentiellement deux taches. La première tache consiste à déduire des signaux reçus la position du véhicule, d'actualiser constamment cette position et de déterminer si le véhicule s'est effectivement déplacé. La deuxième tache consiste à décider, lorsqu'il y a eu changement de position, selon des critères préalablement déterminés, quelles sont les commandes à donner automatiquement afin que l'épandage soit effectué comme souhaité. D'autres taches peuvent être le suivi du trajet à parcourir et la commande du dispositif, ou des différents dispositifs, d'épandage selon le travail à réaliser à l'aide de ce véhicule d'épandage.

Le véhicule d'épandage de l'invention comprend à cet effet des dispositifs, connus en eux-mêmes, permettant d'enregistrer des données correspondant à un trajet prédéterminé du véhicule et/ou de mémoriser le trajet déjà effectué, ou encore de mémoriser des données relatives à la nature et la quantité de matériaux à épandre sur différents tronçons ou sections du trajet ou selon tout autre critère de variation de l'épandage, prédéfini selon l'application.

Dans la configuration représentée sur la Figure 2, le véhicule d'épandage est pourvu d'un seul dispositif d'épandage 4, situé à l'arrière du véhicule et équipé d'une seule buse 9, et le dispositif de détection d'une position 7 est placé sur le véhicule tracteur 10. Si la distance entre le dispositif de détection 7 et la buse 9 est si grande que, pour une application particulière donnée, elle doit être prise en compte pour la commande du dispositif d 'épandage, cette prise en compte est effectuée dans le dispositif d'exploitation des signaux émis par le satellite 8.

Grâce à la précision du système GPS, le déplacement du véhicule d'épandage peut être déterminé non seulement dans un plan au moins approximativement horizontal, mais aussi dans un espace tridimensionnel.

## Revendications

1. Véhicule d'épandage à épàndage variable, permettant d'épandre un ou plusieurs matériaux et comprenant à cet effet des moyens de commande permettant de varier la quantité du (ou des) matériau(x) épandu(s), **caractérisé en ce qu**'il comprend également des moyens de détection (7) d'une position du véhicule par rapport à un répère extérieur.

2. Véhicule selon la revendication 1, **caractérisé en ce que** les moyens de détection d'une position (7) sont reliés à des moyens d'épandage (4, 6) de façon qu'il y a épandage de matériau uniquement pendant un déplacement du véhicule.

3. Véhicule selon la revendication 1 ou 2, **caractérisé en ce que** les moyens de détection (7) d'une position sont reliés à des moyens d'épandage (4, 6) de façon qu'il y a épandage de matériau uniquement pendant un déplacement du véhicule dans une direction prédéfinie.

4. Véhicule selon l'une quelconque des revendications 1 à 3, **caractérisé en ce que** les moyens de détection (7) d'une position sont reliés à des moyens de commande du déplacement du véhicule.

5. Véhicule selon l'une quelconque des revendications 1 à 4, **caractérisé en ce qu**'il comprend une mémoire destinée à mémoriser des informations sur la base desquelles les moyens d'épandage (4, 6) sont commandés.

6. Véhicule selon l'une quelconque des revendications 1 à 5, **caractérisé en ce que** les moyens de détection (7) d'une position comprennent un module GPS.
